(19) **Europäisches Patentamt**
**European Patent Office**
**Office européen des brevets**

(11) **EP 2 405 598 A1**

(12) **EUROPEAN PATENT APPLICATION**
published in accordance with Art. 153(4) EPC

(43) Date of publication:
**11.01.2012 Bulletin 2012/02**

(21) Application number: **10748766.2**

(22) Date of filing: **03.03.2010**

(51) Int Cl.:
**H04J 11/00** (2006.01)   **H04L 27/01** (2006.01)

(86) International application number:
**PCT/JP2010/053404**

(87) International publication number:
**WO 2010/101172 (10.09.2010 Gazette 2010/36)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **03.03.2009 JP 2009049945**

(71) Applicants:
• **Sharp Kabushiki Kaisha**
  **Osaka-shi, Osaka 545-8522 (JP)**
• **Osaka University**
  **Suita-shi**
  **Osaka 565-0871 (JP)**

(72) Inventors:
• **YOKOMAKURA, Kazunari**
  **Osaka 545-8522 (JP)**
• **HAMAGUCHI, Yasuhiro**
  **Osaka 545-8522 (JP)**

• **NAKAMURA, Osamu**
  **Osaka 545-8522 (JP)**
• **GOTO, Jungo**
  **Osaka 545-8522 (JP)**
• **TAKAHASHI, Hiroki**
  **Osaka 545-8522 (JP)**
• **IBI, Shinsuke**
  **Osaka 565-0871 (JP)**
• **SAMPEI, Seiichi**
  **Osaka 565-0871 (JP)**
• **MIYAMOTO, Shinichi**
  **Osaka 565-0871 (JP)**

(74) Representative: **Müller - Hoffmann & Partner
Patentanwälte
Innere Wiener Strasse 17
81667 München (DE)**

(54) **WIRELESS COMMUNICATION SYSTEM, RECEPTION APPARATUS, TRANSMISSION APPARATUS, COMMUNICATION METHOD OF WIRELESS COMMUNICATION SYSTEM, CONTROL PROGRAM, AND AUTONOMOUS DISTRIBUTED NETWORK**

(57)    Based on a data signal and a known reference signal, a frequency response of a channel is predicted, and the state of the channel over the entire transmission band is predicted such that frequency allocation is performed in a short period of time. A reception apparatus that receives a signal from a transmission apparatus which distributedly arranges signals in a frequency domain into a plurality of frequencies and which performs wireless transmission, the reception apparatus including: a channel property prediction unit (57) that predicts a channel property over an entire transmission band based on the distributedly arranged channel estimation reference signal; an allocation frequency determination unit (58) that determines the plurality of frequencies in which the signals in the frequency domain are distributedly arranged; and a frequency allocation information generation unit (59) that generates frequency allocation information indicating the determined plurality of frequencies. The reception apparatus transmits the frequency allocation information to the transmission apparatus.

**(Cont. next page)**

EP 2 405 598 A1

# FIG.6

**Description**

Technical Field

The present invention relates to a technology for performing wireless transmission by distributedly arranging signals in a frequency domain into a plurality of frequencies.

Background Art

Recently, the standardization of an LTE (long term evolution) system that is a wireless communication system of the 3.9th generation mobile telephone has almost been completed; the standardization of an LTE-A (referred to as an LTE-advanced, one of IMT-A) that is the 4th generation wireless communication system evolving from the LTE system has been lately started. Since the LTE-A system is required to connect the terminal of the LTE system, it is necessary to maintain the backward compatibility of the LTE system.

Incidentally, as the transmission system of an uplink channel (communication from a mobile station to a base station), a transmission system called DFT-S-OFDM (discrete fourier transform spread orthogonal frequency division multiplexing) has already been employed in the LTE. When this transmission system is defined as a multiple connection system, it is also referred to as SC-FDMA (single carrier frequency division multiple access). Even in the LTE-A, in terms of backward compatibility, it has already been determined that the uplink channel of DFT-S-OFDM will be supported, and, in order to further improve the frequency use efficiency in the uplink channel of the LTE-A, a technology called clustered DFT-S-OFDM (dynamic spectrum control, DSC: dynamic spectrum control) is proposed (for example, see non-patent document 1).

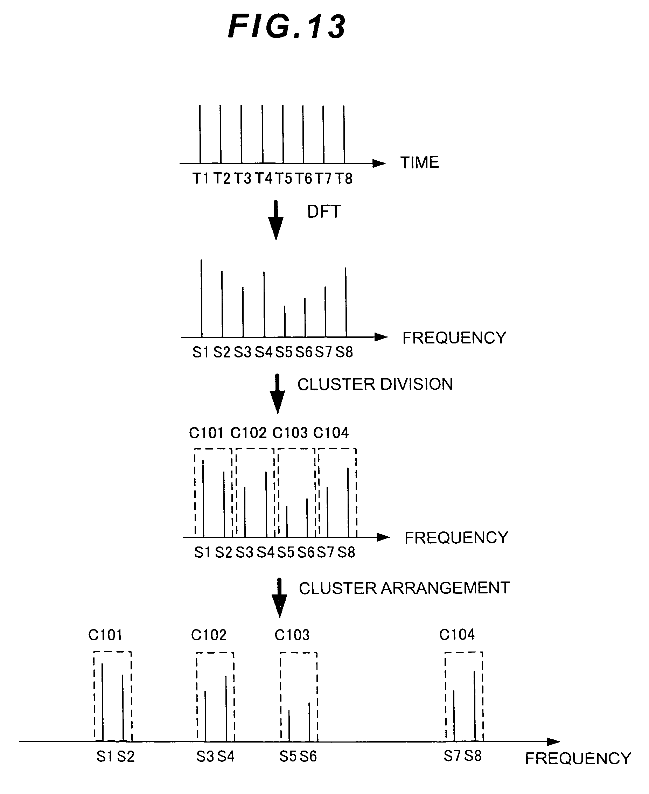

Fig. 13 is a diagram showing an example of the concept of clustered DFT-S-OFDM. Here, a description will be given on the assumption that the number of symbols included in a block is eight, and the cluster size (the number of discrete spectra included in one cluster, that is, the number of subcarriers) is two. Modulation symbols T1 to T8 in a time domain are converted by eight DFTs into frequency signals S1 to S8. Then, the obtained frequency signals S1 to S8 are clustered for each of two subcarriers, and clusters C101 to C104 are allocated in arbitrary positions of frequencies according to the occupied state of bands over the entire system band.

Although, here, for ease of description, the cluster size (the number of subcarriers included in the cluster) is assumed to be two, since, in the LTE, as the smallest unit of wireless resources in a frequency axis used by each mobile station for transmission, 12 continuous subcarriers called a resource block (RB) have already been determined, clustered DFT-S-OFDM is actually utilized through the use of the cluster size of a natural number multiple of 12 subcarriers.

DFT-S-OFDM used in the LTE is a transmission method in which a plurality of RBs is continuously used without the cluster division of the frequency signals S1 to S8. The cluster size will be described below by using the size of the RBs.

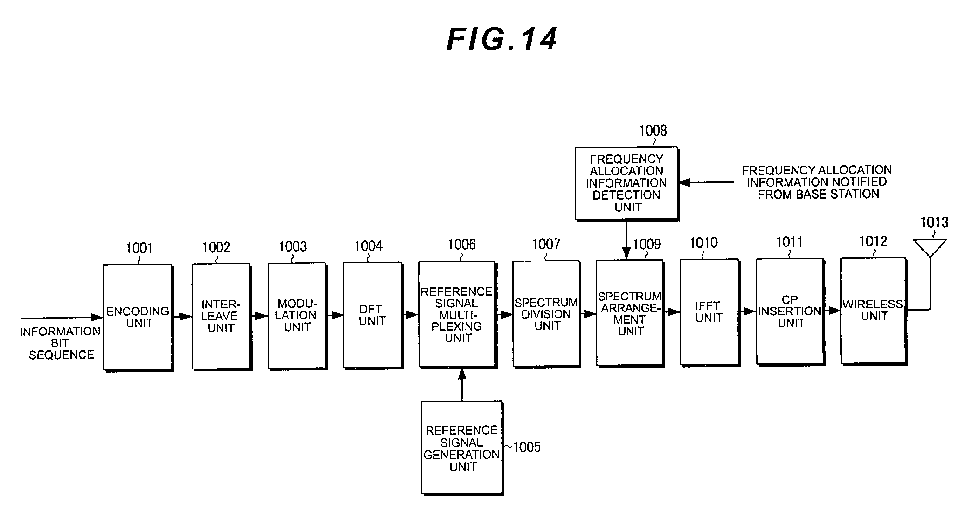

Fig. 14 is a diagram showing an example of a transmission apparatus of clustered DFT-S-OFDM in a mobile station. This transmission apparatus is formed with an encoding unit 1001, an interleave unit 1002, a modulation unit 1003, a DFT unit 1004, a reference signal generation unit 1005, a reference signal multiplexing unit 1006, a spectrum division unit 1007, a frequency allocation information detection unit 1008, a spectrum arrangement unit 1009, an IFFT (inverse fast fourier transform) unit 1010, a CP (cyclic prefix) insertion unit 1011, a wireless unit 1012 and a transmission antenna 1013.

Information bit sequence is subjected to error correction encoding performed by the encoding unit 1001, and thus the encoded bits are obtained, and the time order of the encoded bits is changed by the interleave unit 1002. The encoded bits whose time order has been changed are mapped by the modulation unit 1003 on the phase and the amplitude according to whether or not the encoded bit is 0 or 1, and a modulation symbol is generated. In the generated modulation symbol, a frequency signal is obtained by the DFT unit 1004.

In contrast, a known reference signal (also referred to as a pilot signal) that is transmitted by the reception apparatus in order to equalize distortion caused by a channel is generated by the reference signal generation unit 1005, and is multiplexed with a frequency signal output from the DFT unit 1004. Here, with respect to the reference signal, as a frequency signal constituting the reference signal in the LTE, a system based on a Zadoff-Chu system that is one of CAZAC (constant amplitude and zero auto-correlation) systems is selected. The multiplexed signal is divided by the spectrum division unit 1007 into a predetermined cluster size, and is allocated by the spectrum arrangement unit 1009 to a predetermined frequency based on frequency allocation information notified by the frequency allocation information detection unit 1008.

Here, in the frequency allocation information detection unit 1008, a control signal (for example, a PDCCH (physical downlink control channel) in the LTE) that is transmitted in a downlink channel is previously received by the mobile station, and the multiplexed signal is generally allocated through the use of information on cluster arrangement. Then, the allocated frequency signal is converted into a time signal by the IFFT unit 1010 through the IFFT in which the number of subcarriers (or the number of points defined by the system) over the entire system band is the number of points, receives the insertion of a CP (a copy of a CP length in an end of a wave shape) defined by the system according to the maximum delay time of the wireless channel by the CP insertion unit 1011, is up-converted by the wireless unit 1012 into a wireless frequency and is transmitted from the transmission antenna 1013.

The mechanism of the setting the frequency allocation information will now be described. As described above, when scheduling for allocating the wireless resource in the frequency axis is conducted, a known sounding reference signal is transmitted so that the property of the channel between each of the mobile stations over the entire transmission band and the base station is grasped. For example, in the LTE, an SRS (sounding reference signal) is transmitted every transmission opportunity referred to as a sub-frame at the shortest, and the transmission period is one millisecond at the shortest.

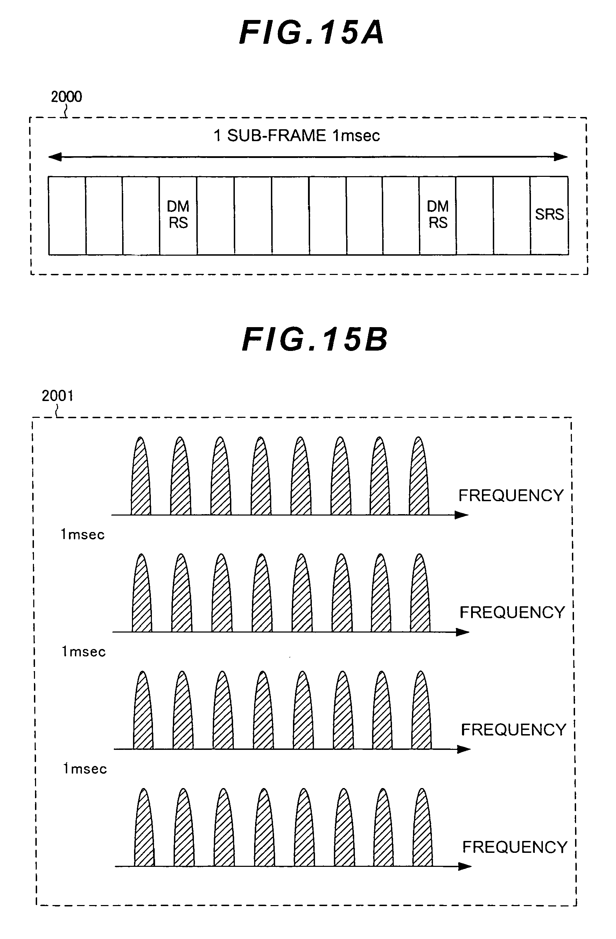

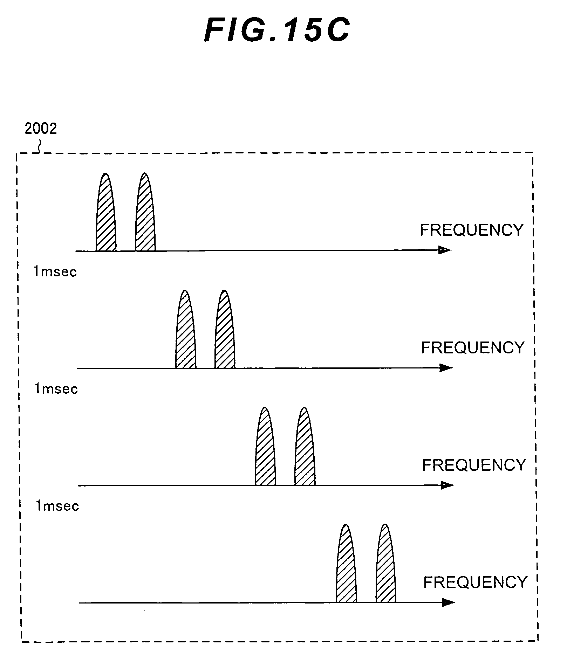

Figs. 15A to 15C are diagrams showing an example of the mechanism of the SRS. In Fig. 15A, reference numeral 2000 represents a sub-frame in the time domain, and the sub-frame is a signal that is transmitted at one transmission opportunity of each of the mobile stations. In Fig. 15A, a DMRS (demodulation reference signal) is the known demodulation reference signal for equalizing the distortion of the channel described in Fig. 14, and is allocated to the fourth symbol and the eleventh symbol of each sub-frame. Furthermore, a signal that is transmitted by the mobile station to estimate the approximate property of the channel over the entire system band in order for the base station to perform the scheduling for determining the frequency allocated to the user is the SRS. Examples showing the transmission method of the SRS are reference numeral 2001 shown in Fig. 15B and reference numeral 2002 shown in Fig. 15C. The SRS is transmitted by an arrangement called a distributed type in which the Zadoff-Chu systems that are same as the DMRS are arranged in the wave shape of a comb, and a plurality of band widths of the SRS transmitted in one transmission is defined according to the transmission power of the mobile station or the like. The reference numeral 2001 shown in Fig. 15B shows a case where the transmission can be performed over the entire band in one transmission opportunity. In this case, the channel can be grasped every one millisecond which is the shortest.

In contrast, the reference numeral 2002 shown in Fig. 15C is one example of a case where the SRS can only be transmitted to a part of the band. As shown in Fig. 15C, since the band is first divided into four parts and the SRS is transmitted in four transmission opportunities (four milliseconds) as shown in the figure, it takes a long period of time to grasp the property of the channel over the entire system band. Furthermore, since, in the transmission of the SRS, consideration is given to the transmission of other mobile stations, and there are transmission opportunities when the transmission is not performed, it may take four milliseconds or more even in this case.

Related Art Document

Non-patent Document

Non-patent document: 3GPP TS36. 211 v8.5.0

Disclosure of the Invention

Problem to be Solved by the Invention

However, in clustered DFT-S-OFDM, DSC (including multicarrier transmission such as OFDM, that can distributedly arrange subcarriers) and the like, a frequency response in the channel over the entire system band is grasped, and then a frequency to which a signal is allocated in a wide region is selected and distributedly arranged, with the result that a satisfactory transmission property can be obtained. Therefore, if it takes a long period of time to grasp the property of the channel over the entire system band, it is impossible to follow the change of the channel over time, and thus there has been a problem in which the channel is already changed significantly at the time when the determined allocation is reflected.

Furthermore, since the DMRS is not allocated to the frequency in which a data signal is not arranged, only with the DMRS, there has been a problem in which it is impossible to determine which frequency is successfully used over the entire system band in the subsequent transmission opportunity.

The present invention is made in view of the foregoing situation; an object of the present invention is to provide a wireless communication system, a reception apparatus, a transmission apparatus, a communication method of the wireless communication system, a control program and an autonomous distributed network which can predict a frequency response of a channel based on a data signal and a known reference signal and which can predict the state of the channel over the entire transmission band for performing frequency allocation in a short period of time.

Means for Solving the Problem

(1) In order to achieve the above object, according to the present invention, there is provided a wireless communication system described below. Specifically, the wireless communication system includes:

a transmission apparatus that transmits wireless signals obtained by multiplexing signals obtained by distributedly arranging signals in a frequency domain into a plurality of frequencies and a channel estimation reference signal; and a reception apparatus that receives the wireless signals, in which the reception apparatus predicts a channel property over an entire transmission band based on the channel estimation reference signal, determines the plurality of frequencies in which the signals in the frequency domain are distributedly arranged and transmits information indicating the determined plurality of frequencies to the transmission apparatus.

Since, as described above, the channel property over the entire transmission band is predicted based on the demodulation reference signals distributedly arranged and the plurality of frequencies where the signals in the frequency domain are distributedly arranged are determined, it is possible to determine allocation frequencies over the entire system band through the use of the data demodulation reference signals. Therefore, it is possible to reduce the update time of the allocation information and enhance the throughput.

(2) In the wireless communication system of the present invention, the channel estimation reference signal is a demodulation reference signal used for demodulating a data signal, and is allocated to the same frequency as the data signal.

In this configuration, it is possible to determine allocation frequencies over the entire system band through the use of the data demodulation reference signals. Therefore, it is possible to reduce the update time of the allocation information and enhance the throughput.

(3) In the wireless communication system of the present invention, the reception apparatus selects, as the plurality of frequencies in which the signals in the frequency domain are distributedly arranged, frequencies that are highly reliable in the prediction among the predicted channel property over the entire transmission band.

In this configuration, it is possible to determine allocation frequencies over the entire system band through the use of only the highly reliable frequencies. Therefore, it is possible to reduce the update time of the allocation information and enhance the throughput.

(4) In the wireless communication system of the present invention, the reception apparatus calculates the reliability of the prediction based on dispersion of noise that is an error of the prediction.

In this configuration, it becomes possible to quantify the reliability of the prediction simply and rapidly.

(5) In the wireless communication system of the present invention, the transmission apparatus allocates a search reference signal to a frequency with the low reliability of the prediction, and transmits the search reference signal.

In this configuration, it is possible to grasp, while utilizing wireless resources effectively, the channel property over the entire system band with a high degree of accuracy.

(6) In the wireless communication system of the present invention, the search reference signal is a sounding reference signal.

In this configuration, it is possible to reduce a time needed for the reception apparatus to grasp the entire band and effectively grasp a satisfactory frequency.

(7) In the wireless communication system of the present invention, the transmission apparatus allocates the data signal to a frequency with the low reliability of prediction, and transmits the data signal.

In this configuration, since the demodulation reference signal is allocated in the region with the low reliability of prediction, it becomes possible to grasp the frequency property with a high degree of accuracy even in the frequency domain with the low reliability of prediction. Therefore, it is possible to easily predict the channel property over the entire system band and effectively perform the transmission.

(8) Moreover, according to the present invention, there is provided a reception apparatus that receives a signal from a transmission apparatus which distributedly arranges signals in a frequency domain into a plurality of frequencies and which performs wireless transmission, the reception apparatus including: a channel property prediction unit that predicts a channel property over an entire transmission band based on the distributedly arranged channel estimation reference signal; an allocation frequency determination unit that determines the plurality of frequencies in which the signals in the frequency domain are distributedly arranged; and a frequency allocation information generation unit that generates frequency allocation information indicating the determined plurality of frequencies, in which the reception apparatus transmits the frequency allocation information to the transmission apparatus.

Since, as described above, the channel property over the entire transmission band is predicted based on the demodulation reference signals distributedly arranged and the plurality of frequencies where the signals in the frequency domain are distributedly arranged are determined, it is possible to determine allocation frequencies over the entire system band through the use of the data demodulation reference signals. Therefore, it is possible to reduce the update time of the allocation information and enhance the throughput.

(9) In the reception apparatus of the present invention, the channel estimation reference signal is a signal used for demodulating a data signal, and is allocated to the same frequency as the data signal.

In this configuration, it is possible to determine allocation frequencies over the entire system band through the use of the data demodulation reference signals. Therefore, it is possible to reduce the update time of the allocation information and enhance the throughput.

(10) In the reception apparatus of the present invention, the channel property prediction unit includes: a reliability calculation unit that calculates a reliability of the predicted channel property over the entire transmission band; and a frequency candidate determination unit that determines frequency candidates in which the signals in the frequency domain are distributedly arranged among the calculated reliability.

In this configuration, it is possible to determine allocation frequencies over the entire system band through the use of only the highly reliable frequencies. Therefore, it is possible to reduce the update time of the allocation information and enhance the throughput.

(11) In the reception apparatus of the present invention, the reliability calculation unit calculates the reliability of the prediction based on dispersion of noise that is an error of the prediction.

In this configuration, it becomes possible to quantify the reliability of the prediction simply and rapidly.

(12) Moreover, according to the present invention, there is provided a transmission apparatus which distributedly arranges signals in a frequency domain into a plurality of frequencies and which performs wireless transmission to a reception apparatus, in which the transmission apparatus allocates a search reference signal to a frequency with the low reliability of prediction in a channel property over an entire transmission band predicted by the reception apparatus, and transmits the search reference signal.

In this configuration, it becomes possible to roughly grasp, while utilizing wireless resources effectively, the channel property over the entire system band.

(13) In the transmission apparatus of the present invention, the search reference signal is a sounding signal.

In this configuration, it is possible to reduce a time needed for the reception apparatus to grasp the entire band and effectively grasp a satisfactory frequency.

(14) Moreover, according to the present invention, there is provided a transmission apparatus which distributedly arranges signals in a frequency domain into a plurality of frequencies and which performs wireless transmission to a reception apparatus, in which the transmission apparatus allocates a data signal to a frequency with the low reliability of prediction in a channel property over an entire transmission band predicted by the reception apparatus, and transmits the data signal.

In this configuration, since the demodulation reference signal is allocated in the region with the low reliability of prediction, it becomes possible to grasp the satisfactory frequency even in the frequency domain with the low reliability of prediction. Therefore, it becomes possible to easily predict the channel property over the entire system band and effectively perform the transmission.

(15) Moreover, according to the present invention, there is provided a communication method of a wireless communication system that includes a transmission apparatus which distributedly arranges signals in a frequency domain into a plurality of frequencies to perform wireless transmission and a reception apparatus which receives the wirelessly transmitted signals, in which the reception apparatus predicts a channel property over an entire transmission band based on the distributedly arranged channel estimation reference signal, determines the plurality of frequencies in which the signals in the frequency domain are distributedly arranged and transmits information indicating the determined plurality of frequencies to the transmission apparatus and the transmission apparatus distributedly arranges, based on the information indicating the frequencies, the signals in the frequency domain in the plurality of frequencies to perform the wireless transmission to the reception apparatus

Since, as described above, the channel property over the entire transmission band is predicted based on the demodulation reference signals distributedly arranged and the plurality of frequencies where the signals in the frequency domain are distributedly arranged are determined, it is possible to determine allocation frequencies over the entire system band through the use of the data demodulation reference signals. Therefore, it is possible to reduce the update time of the allocation information and enhance the throughput.

(16) Moreover, according to the present invention, there is provided a control program for a reception apparatus that receives a signal from a transmission apparatus which distributedly arranges signals in a frequency domain into a plurality of frequencies and which performs wireless transmission, in which a channel property prediction unit performs processing for predicting a channel property over an entire transmission band based on the distributedly arranged channel estimation reference signal; an allocation frequency determination unit performs processing for determining the plurality of frequencies in which the signals in the frequency domain are distributedly arranged; a frequency allocation information generation unit performs processing for generating frequency allocation information indicating the determined plurality of frequencies; processing for transmitting the frequency allocation information to the transmission apparatus is performed; and the types of processing are converted into commands such that the commands can be read and performed by a computer.

Since, as described above, the channel property over the entire transmission band is predicted based on the channel estimation reference signals distributedly arranged and the plurality of frequencies where the signals in the frequency domain are distributedly arranged are determined, it is possible to determine allocation frequencies over the entire system band through the use of the data demodulation reference signals. Therefore, it is possible to reduce the update time of the allocation information and enhance the throughput.

(17) Moreover, according to the present invention, there is provided an autonomous distributed network including: a plurality of communication devices that transmit and receive wireless signals obtained by multiplexing signals obtained by distributedly arranging signals in a frequency domain into a plurality of frequencies and a channel estimation reference signal, in which at least one of the communication devices predicts a channel property over an entire transmission band based on the channel estimation reference signal, determines the plurality of frequencies in which the signals in the frequency domain are distributedly arranged and transmits information indicating the determined plurality of frequencies to any of the other transmission apparatus.

Since, as described above, the channel property over the entire transmission band is predicted based on the demodulation reference signals distributedly arranged and the plurality of frequencies where the signals in the frequency domain are distributedly arranged are determined, it is possible to determine allocation frequencies over the entire system band through the use of the data demodulation reference signals. Therefore, it is possible to reduce the update time of the allocation information and enhance the throughput.

Effects of the Invention

According to the present invention, since it is possible to grasp the frequency property of satisfactory channel response, a high frequency selection diversity effect is obtained and a transmission property or throughput is enhanced.

Brief Description of the Drawings

[Fig. 1] A diagram showing an example of the concept of an embodiment of the present invention;
[Fig. 2] A diagram showing a relationship between an impulse response and a frequency response;
[Fig. 3] A diagram showing an example of the concept for predicting the frequency response;
[Fig. 4] A diagram showing an example of noise power in each frequency calculated by Formula (13);
[Fig. 5] A diagram showing a property when L31 can fully grasp the frequency property of a channel over the entire band, a property when L32 is the property of the present embodiment and a property when L33 does not perform selection;
[Fig. 6] A diagram showing the configuration of a reception apparatus;
[Fig. 7] A diagram showing an example of the configuration of a channel property prediction unit;
[Fig. 8] A flowchart showing an operation of selecting a frequency that is highly reliable in the prediction of a channel property;
[Fig. 9A] A diagram showing an example of the concept of a second embodiment;
[Fig. 9B] A diagram showing the example of the concept of the second embodiment;
[Fig. 10] A diagram showing an example of a mobile station device;
[Fig. 11] A diagram showing an example of a third embodiment; [Fig. 12A] A diagram showing an example of a fourth embodiment;
[Fig. 12B] A diagram showing the example of the fourth embodiment;
[Fig. 13] A diagram showing an example of the concept of clustered DFT-S-OFDM;
[Fig. 14] A diagram showing an example of the transmission apparatus of clustered DFT-S-OFDM in the mobile station;
[Fig. 15A] A diagram showing an example of the mechanism of an SRS;
[Fig. 15B] A diagram showing the example of the mechanism of the SRS;
[Fig. 15C] A diagram showing the example of the mechanism of the SRS; and
[Fig. 16] A diagram showing an example of the autonomous distributed network.

Best Modes for Carrying Out the Invention

Embodiments of the present invention will be described below with reference to accompanying drawings. In the following embodiments, unless otherwise particularly specified, a description will be given on the assumption that a RB size is a cluster size and that the number of Rbs in a system band is 12. However, it is unnecessary that the cluster size be the same as the RB size; even if the cluster size is not the same as the RB size, they are essentially the same. In addition, the present invention is applicable not only to clustered DFT-S-OFDM, but also to a transmission method in which a frequency signal can be distributedly arranged over the entire system band, such as, for example, an OFDM method or MC-CDM (multi-carrier code division multiplexing) which is a multicarrier method, and thus the same concept using these methods is included in the present invention. Furthermore, although, in the following embodiments, the communication of an uplink channel is discussed, even if the same method is used for a downlink channel, it is essentially the same as the present invention. In addition, in terms of the prediction of the channel, the present invention is not limited to the distributed arrangement, and can be used for allocation in a transmission method of continuous arrangement such as SC-FDMA. Moreover, although, in the following embodiments, a description is given on the assumption that prediction is performed with a data signal demodulation reference signal, since the prediction can also be performed with a sounding reference signal, a part of which is only transmitted, this concept is also included in the present invention.

[First embodiment]

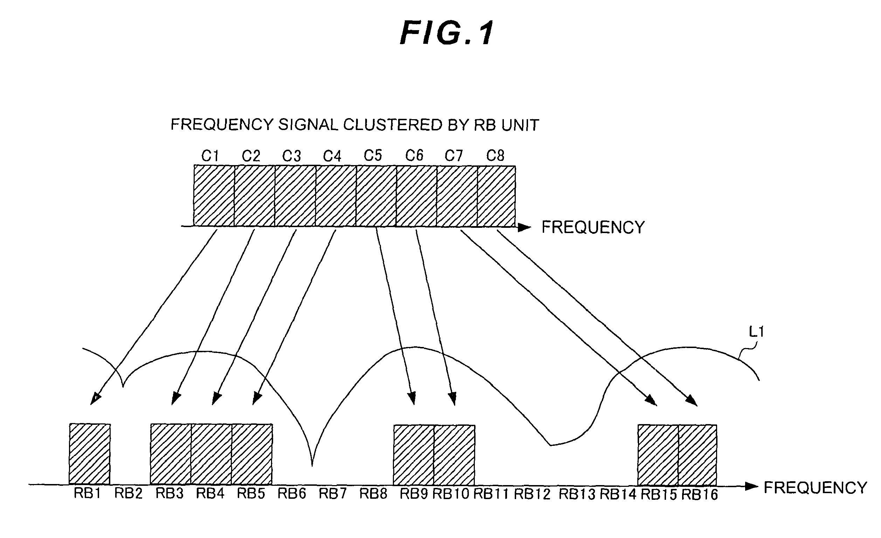

Fig. 1 is a diagram showing an example of the concept of an embodiment of the present invention. Here, symbols RB1 to RB12 represent RBs within a system band (band that can be allocated); symbol L1 represents the channel property of a frequency of an uplink channel. Moreover, symbols C1 to C8 are frequency signals that have been clustered, and they are allocated to satisfactory frequencies over the system band. Here, the number of RBs that can be allocated over the entire system band is assumed to be 16. In this case, since a reference signal (DMRS) for demodulating the channel is allocated to an allocated band, it is possible to grasp a channel gain in a frequency axis of only frequencies RB1, RB3, RB4, RB5, RB9, RB10, RB15 and RB16 that are allocated in Fig, 1.

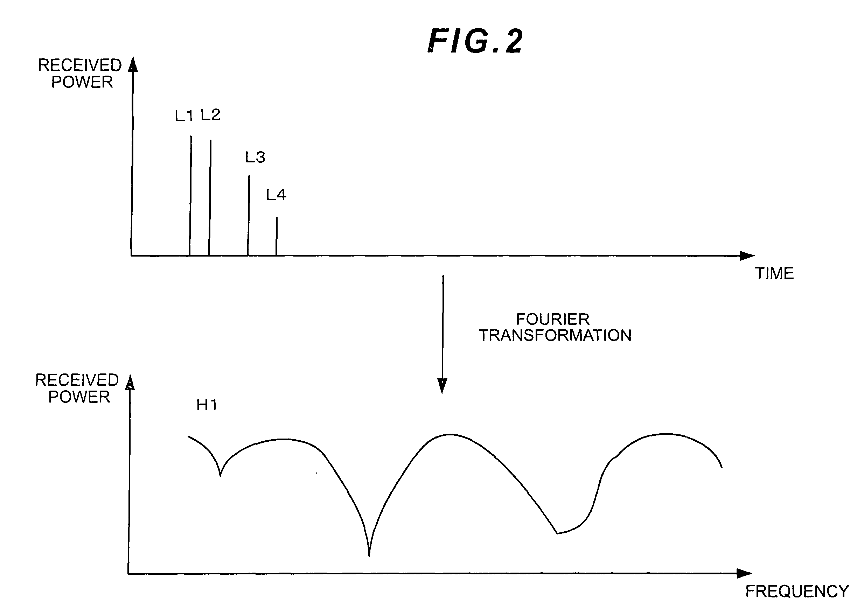

Fig. 2 is a diagram showing the relationship between an impulse response and a frequency response described above. As shown in this figure, the impulse response of a wireless channel is determined by the number of passes (channel memory) of the impulse response measured by a reception apparatus and a delay time. Here, when, in Fig. 2, the number of passes is assumed to be four and the passes are assumed to be L1 to L4, the channel gain H1 of the frequency axis is determined by, in this case, the power of the passes L1 to L4 and the delay time, and, as its delay distribution becomes lower, restraint between adjacent discrete frequencies becomes greater.

Therefore, even when only the frequency used in the transmission is grasped by the DMRS, it is possible to perform prediction to some extent with respect to the frequency response in the vicinity of the allocation through the use of the above-mentioned fact. Then, in order for the frequency response of the channel to be predicted, a frequency response that is partially estimated by the distributedly arranged DMRS is converted by IFFT into the impulse response, only a part of the impulse of a length from the front end corresponding to a CP is left and zero is inserted into the remaining.

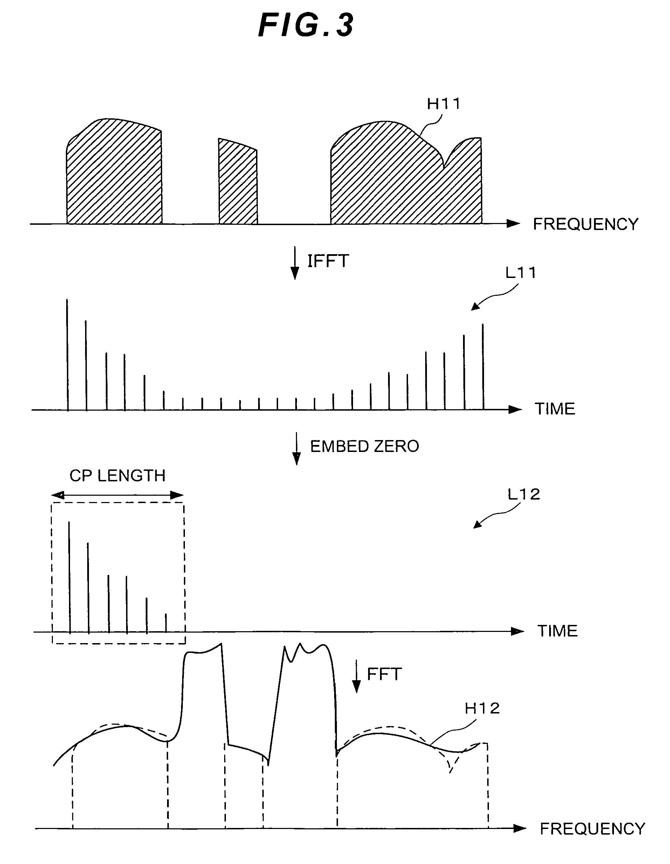

Fig. 3 is a diagram showing an example of the concept for predicting the frequency response. In Fig. 3, symbol H11 represents the frequency response that is estimated from the allocated frequency, and the frequencies that are not allocated are zero. Then, one that is obtained by converting this on the time domain is represented by symbol L11. Since a frequency that is not transmitted at this point is assumed to have a gain of zero, the impulse response extends equivalently. However, since design is actually made such that the impulse response falls within the CP length, as indicated by symbol L12, zero is inserted into the impulse response that appears after the CP. Although, here, the actually performed processing is realistically based on the CP length, it is not always necessary to use the CP length; if the maximum delay time of a delay wave is measured, it may be set at that value. Therefore, there is no limitation to this.

Then, in the same way as H12, L12 is converted into the frequency response by a FFT. In this case, although a frequency that is not used for the transmission is complemented, the accuracy of the channel gain of a frequency that is not allocated here is evaluated by the magnitude of dispersion of an error between a true frequency property and H12. With respect to this, how the dispersion of noise is calculated will be described below. First, when it is assumed that the number of points of the DFT is $N_{DFT}$, and the number of points of the FFT is $N_{FFT}$, the reception signal of a pilot signal is expressed by formula (1).

[Formula 1]

$$\mathbf{R} = \mathbf{HMS}_p + \varsigma \quad \cdots (1)$$

where R is a reception signal vector of a complex number in the frequency axis of $N_{FFT} \times 1$, H is a channel gain of a complex number over the entire band and is a diagonal matrix of $N_{FFT} \times N_{FFT}$ in which the gains of the individual frequencies are arranged in diagonal components, and Sp is a transmission signal vector of $N_{DFT} \times 1$ representing the amplitude and the phase of a pilot signal in the frequency axis. R, H and Sp are expressed by the following formulas, respectively.

[Formula 2]

$$\mathbf{R} = \left[ R_1, R_2, \ldots R_{N_{FFT}} \right] \quad \cdots (2)$$

[Formula 3]

$$\mathbf{H} = \mathrm{diag} \left\{ H_1, H_2, \ldots H_{N_{FFT}} \right\} \quad \cdots (3)$$

[Formula 4]

$$\mathbf{S}_p = \left[ S_1, S_2, \ldots S_{N_{DFT}} \right] \quad \cdots (4)$$

where $\eta$ is a noise vector of a complex number of $N_{FFT} \times 1$, and M is a mapping matrix of $N_{FFT} \times N_{DFT}$ representing to which frequency each of discrete spectra (subcarriers) is allocated and is a matrix in which a column vector index represents an index before the arrangement and a row vector index represents an index after the arrangement and in which only the allocated element is 1 and the other elements are 0. For example, when four discrete spectra are allocated to indexes 1, 2, 4 and 6 among eight frequency points that can be allocated, formula (5) is given.

[Formula 5]

$$M = \begin{bmatrix} 1 & 0 & 0 & 0 \\ 0 & 1 & 0 & 0 \\ 0 & 0 & 0 & 0 \\ 0 & 0 & 1 & 0 \\ 0 & 0 & 0 & 0 \\ 0 & 0 & 0 & 1 \\ 0 & 0 & 0 & 0 \\ 0 & 0 & 0 & 0 \end{bmatrix} \quad \cdots (5)$$

Then, when (demapping) processing for extracting the original signal from the reception signal represented by formula (1) is performed, the reception signal is represented by formula (6). At the time of estimation of the channel, the frequency response is determined by performing division on the reception signal in the signal point arrangement of the DMRS. Here, for simplicity, the signal point arrangement of the pilot signal of each of the frequencies is assumed to be all one (represented by $I_{NDFT \cdot 1}$).

[Formula 6]

$$\mathbf{R}_d = \mathbf{M}^T \mathbf{R} = \mathbf{M}^T \mathbf{HMI}_{N_{DFT} \times 1} + \varsigma_d \qquad \cdots (6)$$

where $R_d$ is a reception signal vector of a complex number of $N_{DFT} \times 1$ after demapping, and $\eta_d$ is the demapped noise vector of a complex number of $N_{DFT} \times 1$. Then, consider that the impulse response of the original channel is predicted from the reception signal. When the true impulse response is assumed to be h, formula (6) can be changed to the following formula.

[Formula 7]

$$\mathbf{R}_d = \sqrt{N_{FFT}} \mathbf{M}^T \mathbf{FWh} + \varsigma_d = \mathbf{Ah} + \varsigma_d \qquad \cdots (7)$$

where $A = \sqrt{N_{FFT}} M^T FW$, F is a DFT matrix of $N_{DFT}$ point that is converted into a frequency domain by obtaining a product, h is an impulse response vector of a complex number of $L \times 1$ and L is the number of passes (the number of points of CP) . They are respectively represented by formulas (8) and (9).

[Formula 8]

$$\mathbf{F} = \frac{1}{\sqrt{N_{FFT}}} \begin{bmatrix} 1 & 1 & \cdots & 1 \\ 1 & e^{-\frac{1}{N_{FFT}}} & \cdots & e^{-\frac{N_{FFT}-1}{N_{FFT}}} \\ \vdots & \vdots & \ddots & \vdots \\ 1 & e^{-\frac{N_{FFT}-1}{N_{FFT}}} & \cdots & e^{-\frac{(N_{FFT}-1)(N_{FFT}-1)}{N_{FFT}}} \end{bmatrix} \qquad \cdots (8)$$

[Formula 9]

$$h = \begin{bmatrix} h_1, h_2, \ldots h_L \end{bmatrix}^T \qquad \cdots (9)$$

where W is a matrix for conversion into the impulse response of $N_{FFT}$ point, is equivalent to processing for putting zero into the points of the impulse response from $L + 1$ point to $N_{FFT}$ point and is represented by formula (10).

[Formula 10]

$$\mathbf{W} = \begin{bmatrix} \acute{\mathbf{E}}_L \\ \mathbf{O}_{(N_{FFT}-L) \times L} \end{bmatrix} \qquad \cdots (10)$$

where $I_L$ is a unit matrix of $L \times L$, and O is a zero matrix in which all elements are zero. Therefore, the estimation value of the impulse response is expressed by formula (11) through formula (7). This processing is equivalent to processing for calculating L11 in Fig. 3.

[Formula 11]

$$\hat{\mathbf{h}} = \frac{1}{\sqrt{N_{FFT}}}\left(\mathbf{M}^T\mathbf{F}\mathbf{W}\right)^{-1}\mathbf{R}_d = \mathbf{A}^+\mathbf{R}_d = \mathbf{h} + \mathbf{A}^+\varsigma_d \qquad \cdots (11)$$

where the first term represents the true impulse response, the second term represents the noise component, $\mathbf{A}^+$ is a pseudo inverse matrix of a matrix A and $\mathbf{A}^+ = (\mathbf{A}\mathbf{A}^H)^{-1}\mathbf{A}^H$. Then, the estimated impulse response is converted into a frequency. Therefore, processing on L12 in Fig. 3 is performed (which is equivalent to obtaining the product of the matrix W (formula (10)) on the left), and formula (12) is given by conversion into the frequency through the FFT.

[Formula 12]

$$\hat{\mathbf{H}} = \sqrt{N_{FFT}}\mathbf{F}\mathbf{W}\hat{\mathbf{h}} = \sqrt{N_{FFT}}\mathbf{F}\mathbf{W}\mathbf{A}^+\mathbf{R}_d = \sqrt{N_{FFT}}\mathbf{F}\mathbf{W}\mathbf{A}^+\mathbf{h} + \sqrt{N_{FFT}}\mathbf{F}\mathbf{W}\mathbf{A}^+\varsigma_d$$

$$\cdots (12)$$

The estimation value of the actual frequency response is calculated from formula (12) as indicated by H12 of Fig. 3. Here, in clustered DFT-S-OFDM, the estimation value of a frequency that is not transmitted is also obtained; it is then important if its reliability is high. In consideration of this point, since the noise component affects its accuracy, consider the dispersion of the second term of formula (12). The covariance matrix of the second term of formula (12) is expressed by formula (13) below.

[Formula 13]

$$\sqrt{N_{FFT}}\mathbf{F}\mathbf{W}\mathbf{A}^+\varsigma_d\left(\sqrt{N_{FFT}}\mathbf{F}\mathbf{W}\mathbf{A}^+\varsigma_d\right)^H = N_{FFT}N_0\mathbf{F}^H\mathbf{W}(\mathbf{A}^+\mathbf{A}^{+H})\mathbf{W}^T\mathbf{F}^H$$

$$\cdots (13)$$

where No is a noise spectrum power density that is noise power per unit frequency in a receiver. The diagonal component means the magnitude of the noise power in each frequency; as it becomes smaller, the reliability is increased whereas, as it becomes larger, the reliability is decreased.

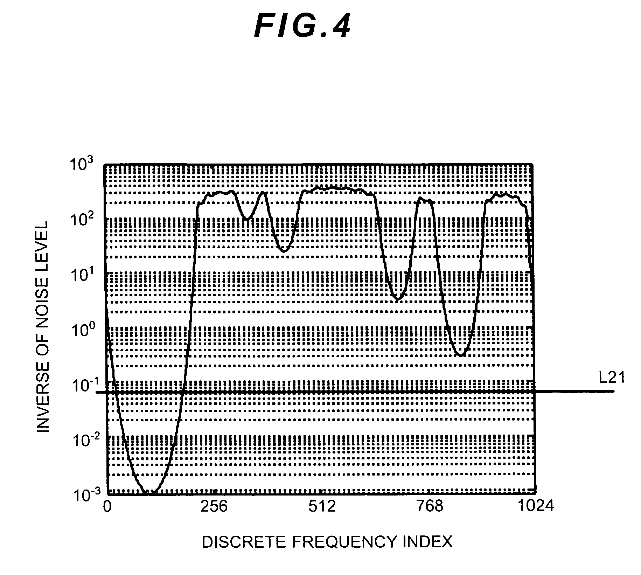

Fig. 4 is a diagram showing an example of the noise power in each frequency calculated from formula (13). The horizontal axis is a frequency index, and the vertical axis is the reciprocal of the diagonal component expressed by formula (13). This figure shows values obtained by performing normalizing such that signal power becomes one, and means that $10^0 = 1$ and a signal to noise power ratio (SNR) is 0 dB. As the value becomes smaller, the effect of the noise is increased and the reliability is decreased. Therefore, a threshold value L21 is set for this value, and a frequency equal to or higher than the threshold value is determined to be highly reliable and is made selectable as the frequency that can be allocated. Although, in this threshold value, the number of candidate frequencies which are small and which can be allocated is increased, frequencies that are low in reliability can also be selected.

In contrast, since, when the threshold value is high, highly reliable frequencies are only selection candidates, the number of frequency candidates that can be selected is reduced, and the number of subcarriers that are selected is reduced. The threshold value may be optimized by simulation using a calculator or may be previously set at a fixed value that can be easy to handle.

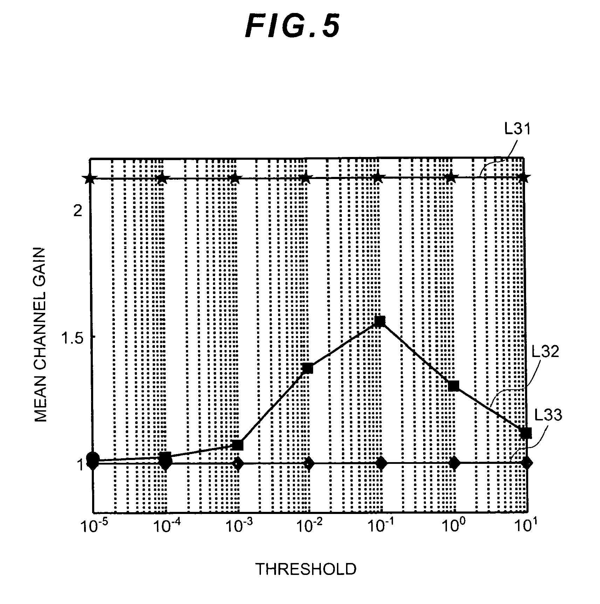

Fig. 5 is a diagram showing a property when L31 fully grasps the frequency property of the channel over the entire band, a property of L32 in the present embodiment and a property when L33 does not perform selection. The horizontal axis represents the threshold value described in Fig. 4; the vertical axis represents the average gain of the selected frequency. This figure shows that the use of this method allows selection to be performed not only by the SRS but also the DMRS, and that, in particular, good frequencies can be selected at a threshold value of $10^{-1}$ with high

probability. As described above, it is found that this method is effective.

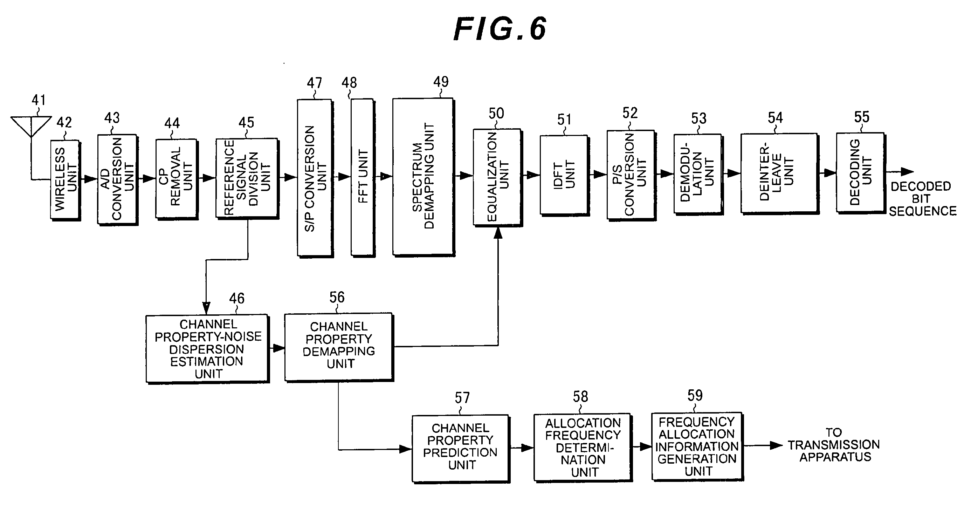

Fig. 6 is a diagram showing the configuration of the reception apparatus. The reception apparatus is formed with a reception antenna 41, a wireless unit 42, an A/D (analog to digital) conversion unit 43, a CP removal unit 44, a reference signal division unit 45, a channel property-noise dispersion estimation unit 46, an S/P (serial to parallel) conversion unit 47, an FFT unit 48, a spectrum demapping unit 49, an equalization unit 50, an IDFT unit 51, a P/S (parallel to serial) conversion unit 52, a demodulation unit 53, a deinterleave unit 54, a decoding unit 55, a channel property demapping unit 56, a channel property prediction unit 57, an allocation frequency determination unit 58 and a frequency allocation information generation unit 59.

A reception signal received by the reception antenna 41 and the wireless unit 42 is converted by the A/D conversion unit 43 into a digital signal; the CP thereof is removed by the CP removal unit 44; and the DMRS thereof is separated by the reference signal division unit 45. Then, the channel property and the noise power of heat noise that are necessary for the detection of data by units from the channel property-noise dispersion estimation unit 46 to the equalization unit 50 are estimated from the DMRS. The channel property-noise dispersion estimation unit 46 has a time/frequency conversion function. Then, the channel property is extracted by the channel property demapping unit 56 from the frequencies used based on the allocation frequency information.

In contrast, the data signal whose DMRS has been separated is parallelized by the S/P conversion unit 47 and is converted by the FFT unit 48 into a frequency signal. The converted frequency signal is extracted by the spectrum demapping unit 49 from the allocation frequency information, equalizes distortion of the channel in the equalization unit 50 from the frequency response input from the channel property demapping unit 56 and is converted by the IDFT unit 51 into a time signal. The converted time signal is serialized by the P/S conversion unit 52 and is broken down into bits from demodulation symbols by the demodulation unit 53. Thereafter, the bits are returned by the deinterleave unit 54 to the original time order, and error correction processing is performed by the decoding unit 55 to obtain a decoded bit sequence.

In contrast, with respect to the received DMRS that has been used for demodulation, the channel property prediction unit 57 calculates the prediction value of the channel property over the entire transmission band and the reliability of the frequencies that are not allocated; allocation information on the frequencies that can be selected is determined from its reliability; and an allocation frequency in the subsequent transmission opportunity is determined through the use of the frequency property estimated by the allocation frequency determination unit 58 from the DMRS and the prediction value estimated by the channel property prediction unit 57. The allocation frequency information that is finally determined is converted by the frequency allocation information generation unit 59 into a signal form for feedback to the transmission apparatus, and is notified to the transmission apparatus.

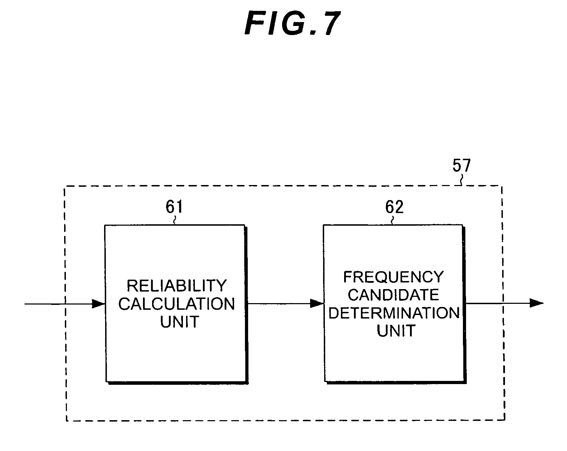

Fig. 7 is a diagram showing an example of the configuration of the channel property prediction unit 57. The channel property prediction unit 57 is formed with a reliability calculation unit 61 and a frequency candidate determination unit 62. With respect to the frequency response estimated from the DMRS, in order to calculate the reliability of the channel to which data is not allocated, the reliability calculation unit 61 uses formula (13) to calculate the power of the prediction value of each frequency and the error (emphasized noise) of the true value, and it is input into the frequency candidate determination unit 62. Then, the frequency candidate determination unit 62 determines, by the determination through the use of the threshold value, that a frequency which exceeds the threshold value and which is reliable is a frequency candidate that can be selected.

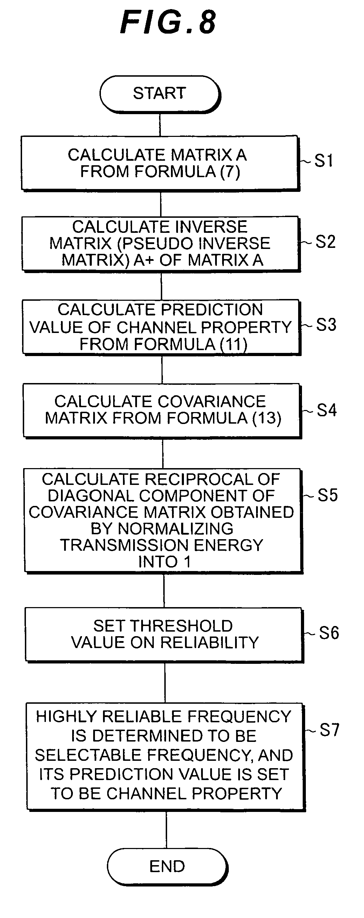

Fig. 8 is a flowchart showing an operation of selecting a frequency having a high reliability in the prediction of the channel property. First, in step S1, a matrix A that is a gain when a signal formed by obtaining a product of the matrix A from the left side on the impulse response represented by formula (7) is the reception signal is calculated. Then, in step S2, the inverse matrix (pseudo inverse matrix) $A^+$ of the matrix A is calculated. In step S3, the prediction value of the channel property over the entire band is calculated from formula (11) through the use of the obtained $A^+$; in step S4, the covariance matrix obtained by formula (13) is calculated; and, in step S5, the reciprocal of the diagonal component is calculated. Then, based on the magnitude of the noise component of each frequency obtained in step S6, the threshold value is determined, and, in step S7, a highly reliable frequency is determined to be the frequency that can be selected and its prediction valued is assumed to be the channel property.

Since, as described above, the allocation frequency over the entire system band can be determined through the use of the DMRS for data demodulation, it becomes possible to reduce the update time of the allocation information and enhance the throughput.

[Second embodiment]

The present embodiment is a method of transmitting a search pilot to a frequency that is significantly low in reliability. As shown in Fig. 4, the reliability is significantly low around the frequencies of 0 to 256, but the channel gain may be high in the frequencies that are low in reliability. Therefore, it can be considered that the search pilot is transmitted to only frequencies around the frequencies of 0 to 256.

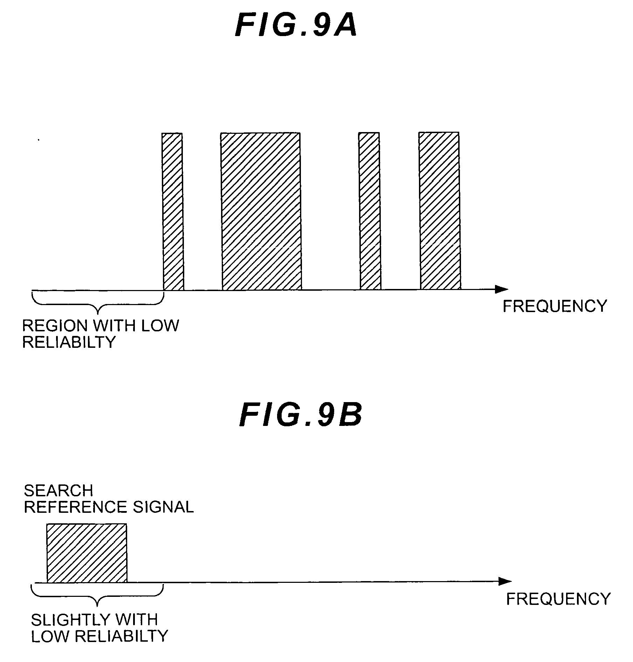

Figs. 9A and 9B are diagrams showing an example of the concept of the present embodiment. Fig. 9A shows an example of the arrangement of reference signals; Fig. 9B shows an example of the arrangement of search reference signals. In this case, as the frequency response is farther away from the allocated frequency, its reliability becomes low. Therefore, the reliability is grasped at an early stage, and, as shown in Fig. 9B, the search reference signal is transmitted to a frequency that is low in reliability. Therefore, it is possible to grasp, while utilizing wireless resources effectively, the channel property over the entire system band more accurately than in the first embodiment.

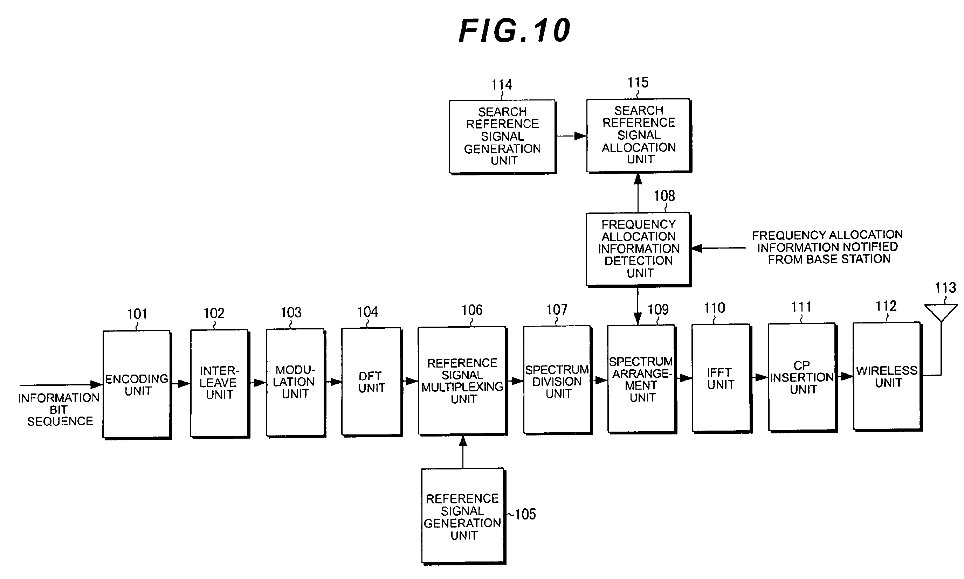

Fig. 10 is a diagram showing an example of a mobile station device. The mobile station device is formed with an encoding unit 101, an interleave unit 102, a modulation unit 103, a DFT unit 104, a reference signal generation unit 105, a reference signal multiplexing unit 106, a spectrum division unit 107, a frequency allocation information detection unit 108, a spectrum arrangement unit 109, an IFFT unit 110, a CP insertion unit 111, a wireless unit 112, a transmission antenna 113, a search reference signal generation unit 114 and a search reference signal allocation unit 115. The components from the encoding unit 101 to the transmission antenna 113 have the same functions as in Fig. 13, and therefore their description will not be repeated.

The search reference signal generation unit 114 generates the search reference signal; the search reference signal allocation unit 115 allocates the search reference signal to a frequency that is considered to be low in reliability based on allocation information on data obtained by the frequency allocation information detection unit 108.

With respect to the frequency that is determined by the search reference signal allocation unit 115 to be low in reliability, for example, information that allocation to frequencies which are somewhat widely continuous is not performed is used. For example, various methods can be considered such as a method of allocation to frequencies in which data is not arranged continuously beyond an X subcarrier; when these reliable arrangements are performed, those methods are the same as the present invention. It can also be considered that, as in the first embodiment, the threshold value is set for the calculated reliability, and a frequency of reliability equal to or less than the threshold value is notified and transmitted. These are also essentially the same, and thus are included in the present invention.

[Third embodiment]

A third embodiment deals with the case of an application to the LTE and the LTE-A. In general, it may be impossible for the SRS for grasping the channel over the entire system band to be transmitted over the entire band due to the transmission power of a mobile station, the arrangement of other mobile stations or the like. Therefore, the DMRS is also utilized, the channel is predicted with the DMRS and the SRS is utilized as the search pilot as described in the second embodiment. Therefore, it becomes possible to reduce a time needed for the mobile station to grasp the entire band and effectively grasp a satisfactory frequency, with the result that improvement is achieved.

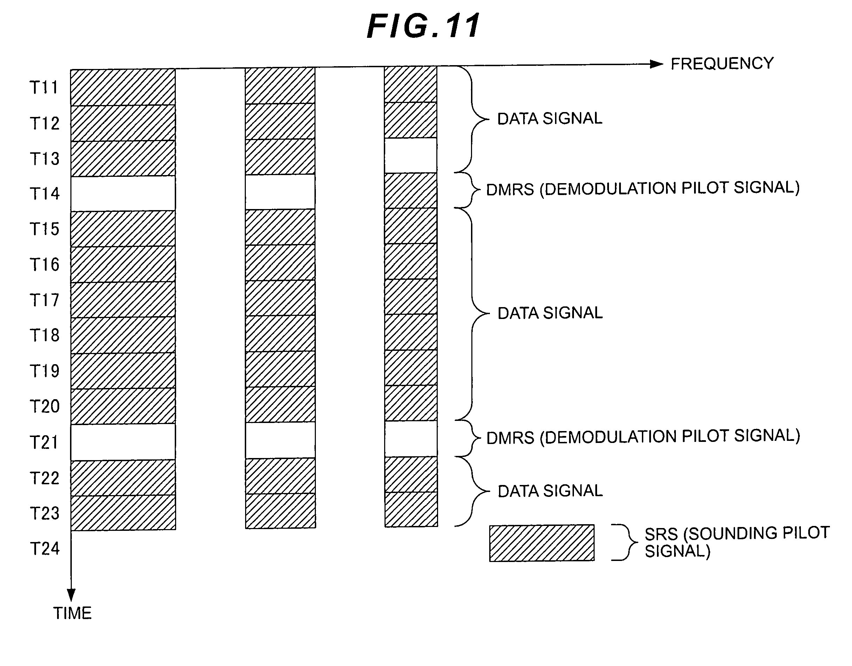

Fig. 11 is a diagram showing an example of the present embodiment. Although, here, an example of an uplink channel of the LTE is described, there is no limitation to this. In this figure, the vertical axis represents time, the horizontal axis represents frequency and T11 to T24 represent the unit of a DFT, that is, represents a DFT block. In T14 and T21, the DMRS is arranged, and are T14 and T21 are pilot signals for decoding a data signal. In contrast, in T24, the SRS that is a sounding pilot signal is arranged; in the LTE, in general, the channel property over the entire system band is grasped through the use of the SRS, and the SRS is arranged as the distributed type.

In the present embodiment, the channel around the frequency to which the DMRS is transmitted is predicted, and the SRS is transmitted to the band of the frequencies that are not widely transmitted, and thus the channel property of the frequency that has been low in reliability is grasped. In this way, it becomes possible to effectively grasp the channel property over the entire system band even in the current system and perform communication making use of the feature of clustered DFT-S-OFDM. It should be noted that although the present embodiment deals with the example of the application to the LTE, even in a system in which the transmission of the sounding pilot signal is performed and the data transmission of a modulation pilot and a data signal is performed by the distributed arrangement, the same things can be performed, and this case is included in the present invention.

[Fourth embodiment]

The present embodiment is an embodiment that focuses on the point that the lowering of the reliability depends on the allocation of the data signal. In general, in a technology, such as clustered DFT-S-OFDM or OFDM, in which the data signal is distributedly arranged in the frequency axis, a frequency having a satisfactory channel gain is selected and allocated, and thus can produce a high throughput. However, when the frequencies on which the allocation is not performed are wide, the reliability the channel property of the frequency is lowered. Therefore, in this method, in order to efficiently utilize the entire system band, a part of the data signal is allocated to frequencies that are low in reliability temporarily or all the time, and thus the accuracy of the prediction from the demodulation pilot signal is increased, with the result that a high throughput is obtained.

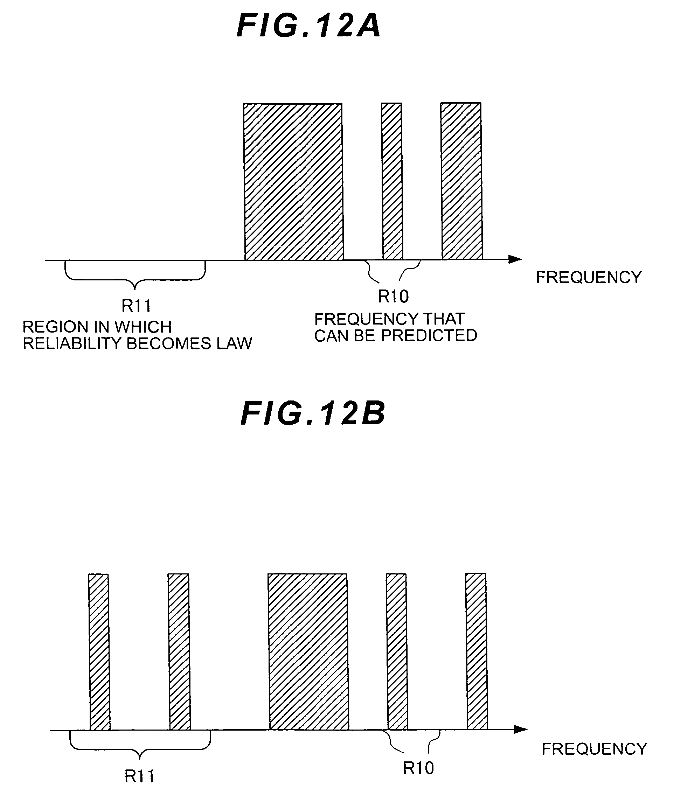

Figs 12A and 12B are diagrams showing an example of the present embodiment. For example, when, as in Fig. 12A, data is allocated according to only the reception condition, if data is allocated to close frequencies as in R10, the accuracy of the prediction is high, and thus those frequencies can be said to be frequencies that can be predicted whereas, in a band to which data is not widely allocated as in R11, the reliability is reduced. Therefore, not all of the part of the allocated data signal is allocated to the satisfactory frequencies, and as shown in Fig. 12B, a part of the data signal is allocated to a region with the low reliability. In this way, the demodulation pilot signal is moderately allocated to the region of R11, and thus it becomes possible to grasp the satisfactory frequencies in the region of R11, with the result that, even if the arrangement is not performed in only one transmission opportunity, the optimum arrangement can be performed in other transmission opportunities. Accordingly, it becomes possible to easily predict the channel property over the entire system band and effectively perform the transmission.

This method may be adaptably performed in the subsequent transmission opportunity where a region which is low in reliability is produced; a method of allocating a resource block (RB) having the lowest reception SNR to an arrangement that can be currently grasped to be the most suitable may be used. Furthermore, data may be evenly arranged every four sub-frames.

The characteristic operation of the reception apparatus according to the present embodiment as described above is performed by executing a control program in the reception apparatus. In other words, the control program according to the present invention is a control program for a reception apparatus that that receives signals from a transmission apparatus which distributedly arranges signals in a frequency domain into a plurality of frequencies and which performs wireless transmission a transmission apparatus which distributedly arranges signals in a frequency domain into a plurality of frequencies and which performs wireless transmission; a channel property prediction unit performs processing for predicting the channel property over the entire transmission band based on the demodulation reference signals distributedly arranged; an allocation frequency determination unit performs processing for determining a plurality of frequencies where the signals in the frequency domain are distributedly arranged; a frequency allocation information generation unit performs processing for generating frequency allocation information indicating the determined plurality of frequencies; processing for transmitting the frequency allocation information to the transmission apparatus is performed; and those types of processing are characterized to be converted into commands such that they can be read and performed by a computer.

Since, as described above, the channel property over the entire transmission band is predicted based on the demodulation reference signals distributedly arranged and the plurality of frequencies where the signals in the frequency domain are distributedly arranged are determined, it is possible to determine allocation frequencies over the entire system band through the use of the data demodulation reference signals. Therefore, it is possible to reduce the update time of the allocation information and enhance the throughput.

[Fifth embodiment]

Unlike the first to fourth embodiments, the present embodiment is an example of the application to an autonomous distributed wireless network. In the first to fourth embodiments, unlike a cellular system, in order for a base station device to centrally control mobile station devices to be accommodated, the base station device receives sounding signals, and thus frequency allocation and the like can be determined. However, in the autonomous distributed wireless network described above, a communication device that performs central control as with the base station device is not present, and thus it is impossible to transmit the sounding reference signals. By contrast, with the prediction technology and the search reference signals of the essence of the present invention, it becomes possible to enhance the throughput.

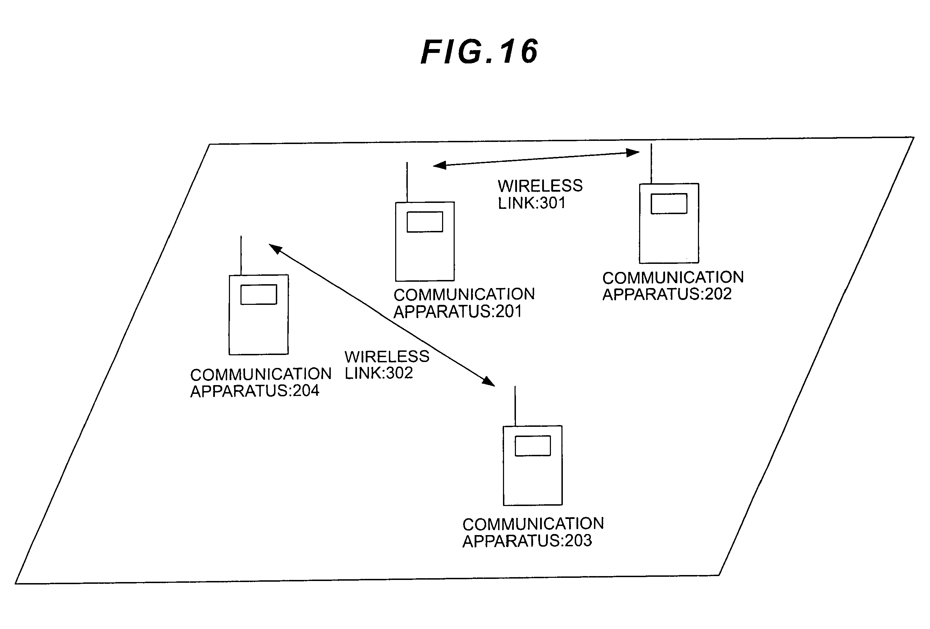

Fig. 16 is a diagram showing an example of the autonomous distributed network. In this figure, an indoor network such as in an office is shown, and mobile stations in the case of a cellar system establish a wireless link to perform communication. For example, a wireless link 301 through which a communication device 201 and a communication device 202 communicate with each other and a wireless link 302 through which a communication device 203 and a communication device 204 communicate with each other are established. Although, if sounding reference signals such the SRSs over the entire transmission band are transmitted, the channel property over the entire transmission band can be grasped, the SRSs are transmitted over the entire band, and thus interference occurs if they are transmitted simultaneously. Furthermore, in the autonomous distributed network described above, the time when the SRS is transmitted cannot be controlled so that the wireless link 301 and the wireless link 302 do not transmit the SRSs simultaneously. However, with the prediction method of the present invention, it is possible to perform the prediction.

Since the prediction method itself is the same as an estimation method using the DMRS described in the first to fourth embodiments, its description will be omitted. Furthermore, when only the estimation method described above is used and thus sufficient accuracy is not acquired, the search reference signal is transmitted to allocated satisfactory frequencies and thus the accuracy is increased. According to the present embodiment, even in the autonomous distributed network, the present invention is used to enhance the accuracy.

Description of symbols

| | |
|---|---|
| 41 | Reception antenna |
| 42 | Wireless unit |
| 43 | A/D conversion unit |
| 44 | CP removal unit |
| 45 | Reference signal division unit |
| 46 | Channel property-noise dispersion estimation unit |
| 47 | S/P conversion unit |
| 48 | FFT unit |
| 49 | Spectrum demapping unit |
| 50 | Equalization unit |
| 51 | IDFT unit |
| 52 | P/S conversion unit |
| 53 | Demodulation unit |
| 54 | Deinterleave unit |
| 55 | Decoding unit |
| 56 | Channel property demapping unit |
| 57 | Channel property prediction unit |
| 58 | Allocation frequency determination unit |
| 59 | Frequency allocation information generation unit |
| 61 | Reliability calculation unit |
| 62 | Frequency candidate determination unit |
| 101 | Encoding unit |
| 102 | Interleave unit |
| 103 | Modulation unit |
| 104 | DFT unit |
| 105 | Reference signal generation unit |
| 106 | Reference signal multiplexing unit |
| 107 | Spectrum division unit |
| 108 | Frequency allocation information detection unit |
| 109 | Spectrum arrangement unit |
| 110 | IFFT unit |
| 111 | CP insertion unit |
| 112 | Wireless unit |
| 113 | Transmission antenna |
| 114 | Search reference signal generation unit |
| 115 | Search reference signal allocation unit |
| 1001 | Encoding unit |
| 1002 | Interleave unit |
| 1003 | Modulation unit |
| 1004 | DFT unit |
| 1005 | Reference signal generation unit |
| 1006 | Reference signal multiplexing unit |
| 1007 | Spectrum division unit |
| 1008 | Frequency allocation information detection unit |
| 1009 | Spectrum arrangement unit |
| 1010 | IFFT unit |
| 1011 | CP insertion unit |
| 1012 | Wireless unit |
| 1013 | Transmission antenna |

**Claims**

**1.** A wireless communication system comprising:

a transmission apparatus that transmits wireless signals obtained by multiplexing signals obtained by distributedly arranging signals in a frequency domain into a plurality of frequencies and a channel estimation reference signal; and

a reception apparatus that receives said wireless signals,

wherein said reception apparatus predicts a channel property over an entire transmission band based on said channel estimation reference signal, determines the plurality of frequencies in which the signals in said frequency domain are distributedly arranged and transmits information indicating the determined plurality of frequencies to said transmission apparatus.

2. The wireless communication system according to claim 1,
wherein said channel estimation reference signal is a demodulation reference signal used for demodulating a data signal, and is allocated to the same frequency as said data signal.

3. The wireless communication system according to claim 1 or 2,
wherein said reception apparatus selects, as the plurality of frequencies in which the signals in said frequency domain are distributedly arranged, frequencies with the low reliability of the prediction among the predicted channel property over the entire transmission band.

4. The wireless communication system according to claim 3,
wherein said reception apparatus calculates the reliability of said prediction based on dispersion of noise that is an error of the prediction.

5. The wireless communication system according to claim 3 or 4,
wherein said transmission apparatus allocates a search reference signal to a frequency with the low reliability of said prediction, and transmits the search reference signal.

6. The wireless communication system according to claim 5,
wherein said search reference signal is a sounding reference signal.

7. The wireless communication system according to claim 3 or 4,
wherein said transmission apparatus allocates the data signal to a frequency with the low reliability of said prediction, and transmits the data signal.

8. A reception apparatus that receives a signal from a transmission apparatus which distributedly arranges signals in a frequency domain into a plurality of frequencies and which performs wireless transmission, the reception apparatus comprising:

a channel property prediction unit that predicts a channel property over an entire transmission band based on said distributedly arranged channel estimation reference signal;

an allocation frequency determination unit that determines the plurality of frequencies in which the signals in said frequency domain are distributedly arranged; and

a frequency allocation information generation unit that generates frequency allocation information indicating said determined plurality of frequencies,

wherein the reception apparatus transmits said frequency allocation information to said transmission apparatus.

9. The reception apparatus according to claim 8,
wherein said channel estimation reference signal is a signal used for demodulating a data signal, and is allocated to the same frequency as said data signal.

10. The reception apparatus according to claim 8 or 9,
wherein said channel property prediction unit includes:

a reliability calculation unit that calculates a reliability of the predicted channel property over the entire transmission band; and

a frequency candidate determination unit that determines frequency candidates in which the signals in said frequency domain are distributedly arranged among said calculated reliability.

11. The reception apparatus according to claim 10,

wherein said reliability calculation unit calculates the reliability of said prediction based on dispersion of noise that is an error of the prediction.

12. A transmission apparatus which distributedly arranges signals in a frequency domain into a plurality of frequencies and which performs wireless transmission to a reception apparatus,
wherein the transmission apparatus allocates a search reference signal to a frequency with the low reliability of prediction in a channel property over an entire transmission band predicted by said reception apparatus, and transmits the search reference signal.

13. The transmission apparatus according to claim 12,
wherein said search reference signal is a sounding signal.

14. A transmission apparatus which distributedly arranges signals in a frequency domain into a plurality of frequencies and which performs wireless transmission to a reception apparatus,
wherein the transmission apparatus allocates a data signal to a frequency with the low reliability of prediction in a channel property over an entire transmission band predicted by said reception apparatus, and transmits the data signal.

15. A communication method of a wireless communication system that includes a transmission apparatus which distributedly arranges signals in a frequency domain into a plurality of frequencies to perform wireless transmission and a reception apparatus which receives said wirelessly transmitted signals,
wherein said reception apparatus predicts a channel property over an entire transmission band based on said distributedly arranged channel estimation reference signal, determines the plurality of frequencies in which the signals in said frequency domain are distributedly arranged and transmits information indicating the determined plurality of frequencies to said transmission apparatus and said transmission apparatus distributedly arranges, based on the information indicating said frequencies, the signals in the frequency domain in the plurality of frequencies to perform the wireless transmission to said reception apparatus

16. A control program for a reception apparatus that receives a signal from a transmission apparatus which distributedly arranges signals in a frequency domain into a plurality of frequencies and which performs wireless transmission,
wherein a channel property prediction unit performs processing for predicting a channel property over an entire transmission band based on said distributedly arranged channel estimation reference signal;
an allocation frequency determination unit performs processing for determining the plurality of frequencies in which the signals in said frequency domain are distributedly arranged;
a frequency allocation information generation unit performs processing for generating frequency allocation information indicating said determined plurality of frequencies;
processing for transmitting said frequency allocation information to said transmission apparatus is performed; and said types of processing are converted into commands such that the commands can be read and performed by a computer.

17. An autonomous distributed network comprising:

a plurality of communication devices that transmit and receive wireless signals obtained by multiplexing signals obtained by distributedly arranging signals in a frequency domain into a plurality of frequencies and a channel estimation reference signal,
wherein at least one of said communication devices predicts a channel property over an entire transmission band based on said channel estimation reference signal, determines the plurality of frequencies in which the signals in said frequency domain are distributedly arranged and transmits information indicating the determined plurality of frequencies to any of the other transmission apparatus.

# FIG. 1

FREQUENCY SIGNAL CLUSTERED BY RB UNIT

C1 C2 C3 C4 C5 C6 C7 C8

FREQUENCY

L1

RB1 RB2 RB3 RB4 RB5 RB6 RB7 RB8 RB9 RB10 RB11 RB12 RB13 RB14 RB15 RB16

FREQUENCY

# FIG.2

RECEIVED POWER

L1 L2

L3

L4

TIME

FOURIER TRANSFORMATION

RECEIVED POWER

H1

FREQUENCY

EP 2 405 598 A1

# FIG.3

FREQUENCY

H11

↓ IFFT

TIME

L11

↓ EMBED ZERO

CP LENGTH

L12

TIME

↓ FFT

H12

FREQUENCY

# FIG.4

# FIG.5

# FIG.6

41 — (antenna)

42 WIRELESS UNIT

43 A/D CONVERSION UNIT

44 CP REMOVAL UNIT

45 REFERENCE SIGNAL DIVISION UNIT

46 CHANNEL PROPERTY-NOISE DISPERSION ESTIMATION UNIT

47 S/P CONVERSION UNIT

48 FFT UNIT

49 SPECTRUM DEMAPPING UNIT

50 EQUALIZATION UNIT

51 IDFT UNIT

52 P/S CONVERSION UNIT

53 DEMODU-LATION UNIT

54 DEINTER-LEAVE UNIT

55 DECODING UNIT

DECODED BIT SEQUENCE

56 CHANNEL PROPERTY DEMAPPING UNIT

57 CHANNEL PROPERTY PREDICTION UNIT

58 ALLOCATION FREQUENCY DETERMI-NATION UNIT

59 FREQUENCY ALLOCATION INFORMATION GENERATION UNIT

TO TRANSMISSION APPARATUS

# FIG.7

57

61

62

RELIABILITY
CALCULATION
UNIT

FREQUENCY
CANDIDATE
DETERMINATION
UNIT

# FIG.8

START

CALCULATE MATRIX A
FROM FORMULA (7) — S1

CALCULATE INVERSE
MATRIX (PSEUDO INVERSE
MATRIX) A+ OF MATRIX A — S2

CALCULATE PREDICTION
VALUE OF CHANNEL PROPERTY — S3
FROM FORMULA (11)

CALCULATE COVARIANCE
MATRIX FROM FORMULA (13) — S4

CALCULATE RECIPROCAL OF
DIAGONAL COMPONENT OF
COVARIANCE MATRIX OBTAINED — S5
BY NORMALIZING
TRANSMISSION ENERGY
INTO 1

SET THRESHOLD
VALUE ON RELIABILITY — S6

HIGHLY RELIABLE FREQUENCY
IS DETERMINED TO BE
SELECTABLE FREQUENCY, AND — S7
ITS PREDICTION VALUE IS SET
TO BE CHANNEL PROPERTY

END

# FIG.9A

FREQUENCY

REGION WITH LOW
RELIABILTY

# FIG.9B

SEARCH
REFERENCE SIGNAL

FREQUENCY

SLIGHTLY WITH
LOW RELIABILTY

# FIG.10

EP 2 405 598 A1

# FIG.11

TIME

FREQUENCY

DATA SIGNAL

DMRS (DEMODULATION PILOT SIGNAL)

DATA SIGNAL

DMRS (DEMODULATION PILOT SIGNAL)

DATA SIGNAL

SRS (SOUNDING PILOT SIGNAL)

EP 2 405 598 A1

# FIG.12A

R11
REGION IN WHICH
RELIABILITY BECOMES LAW

R10
FREQUENCY THAT
CAN BE PREDICTED

FREQUENCY

# FIG.12B

R11

R10

FREQUENCY

# FIG.13

# FIG.14

INFORMATION BIT SEQUENCE → ENCODING UNIT (1001) → INTER-LEAVE UNIT (1002) → MODU-LATION UNIT (1003) → DFT UNIT (1004) → REFERENCE SIGNAL MULTI-PLEXING UNIT (1006) → SPECTRUM DIVISION UNIT (1007) → SPECTRUM ARRANGE-MENT UNIT (1009) → IFFT UNIT (1010) → CP INSERTION UNIT (1011) → WIRELESS UNIT (1012) → (1013)

FREQUENCY ALLOCATION INFORMATION DETECTION UNIT (1008) ← FREQUENCY ALLOCATION INFORMATION NOTIFIED FROM BASE STATION

REFERENCE SIGNAL GENERATION UNIT (1005)

# FIG.15A

2000

1 SUB-FRAME 1msec

| | | | DM RS | | | | | | | DM RS | | | SRS |

# FIG.15B

2001

1msec · · · · · · · · FREQUENCY

1msec · · · · · · · · FREQUENCY

1msec · · · · · · · · FREQUENCY

· · · · · · · · FREQUENCY

# FIG.15C

# FIG.16

WIRELESS LINK:301

COMMUNICATION APPARATUS:201

COMMUNICATION APPARATUS:202

WIRELESS LINK:302

COMMUNICATION APPARATUS:204

COMMUNICATION APPARATUS:203

EP 2 405 598 A1

## INTERNATIONAL SEARCH REPORT

| | International application No. |
|---|---|
| | PCT/JP2010/053404 |

**A. CLASSIFICATION OF SUBJECT MATTER**
*H04J11/00*(2006.01)i, *H04L27/01*(2006.01)i

According to International Patent Classification (IPC) or to both national classification and IPC

**B. FIELDS SEARCHED**

Minimum documentation searched (classification system followed by classification symbols)
H04J11/00, H04L27/01

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P,X<br><br>P,A | Masaomi KAWASHITA et al., "A Study on Prediction of the System Band Frequency Transfer Function in Dynamic Spectrum Control Employed BroadbandWireless Access Systems", Proceedings of the 2009 IEICE General Conference, Tsushin 1, 04 March 2009 (04.03. 2009), page 485, B-5-52 | 1-6,8-13, 15-17<br><br>7,14 |
| X<br><br>A | JP 2006-505230 A  (Qualcomm Inc.), 09 February 2006 (09.02.2006), paragraphs [0032] to [0120]<br>& JP 2006-505229 A       & US 2004/0203442 A1<br>& US 2005/0170783 A1     & US 2005/0215251 A1<br>& US 2006/0279435 A1     & EP 1563622 A<br>& EP 1563696 A           & WO 2004/040827 A2<br>& WO 2004/040813 A1 | 1-2,8-9, 15-17<br>3-7,10-14 |

☒ Further documents are listed in the continuation of Box C.   ☐ See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 17 May, 2010 (17.05.10) | 25 May, 2010 (25.05.10) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2010/053404

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-515899 A (Qualcomm Inc.),<br>14 June 2007 (14.06.2007),<br>entire text; all drawings<br>& US 2005/0135509 A1   & EP 1698129 A<br>& WO 2005/064870 A2 | 1-17 |
| A | WO 2009/022474 A1 (Panasonic Corp.),<br>19 February 2009 (19.02.2009),<br>entire text; all drawings<br>(Family: none) | 1-17 |
| P,A | WO 2009/096387 A1 (Mitsubishi Electric Corp.),<br>06 August 2009 (06.08.2009),<br>entire text; all drawings<br>(Family: none) | 1-17 |
| A | JP 05-075568 A (France Telecom),<br>26 March 1993 (26.03.1993),<br>entire text; all drawings<br>& US 5307376 A        & EP 820172 A3<br>& EP 499560 A1 | 1-17 |

Form PCT/ISA/210 (continuation of second sheet) (July 2009)